# EUROPEAN PATENT APPLICATION

(11) **EP 3 438 871 A1**
(43) Date of publication of application: **06.02.2019**
(21) Application number: 16896016.9
(22) Date of filing: 31.03.2016
(51) Int. Cl.: G06K 9/00, G06F 17/30

(54) **INFORMATION ASSOCIATION METHOD, ELECTRONIC BOOKMARK, AND INFORMATION ASSOCIATION SYSTEM**

(71) Applicant: Shenzhen Royole Technologies Co., Ltd., Shenzhen, Guangdong 518052 (CN)
(72) Inventor: LIU, Chang, Shenzhen Guangdong 518052 (CN); HUANG, Jiawei, Shenzhen Guangdong 518052 (CN)
(74) Representative: Hamer, Christopher K.
(86) International application number: PCT/CN2016/078198
(87) International publication number: WO 2017/166236

(57) **Abstract**

Disclosed are a method for information association, a system for information association, and an electronic bookmark. The method may include the follows. An electronic bookmark covers a book reading page, and receives annotation information input for the book reading page (S11). The electronic bookmark acquires page information of the covered book reading page (S13), and associates the annotation information with the page information (S15). The method for information association can improve efficiency of information management and reading experience in a process of reading a paper book.

## Description

### TECHNICAL FIELD

The present disclosure relates to the field of electronic bookmark having an input function, and particularly to a method for information association, an electronic bookmark, and a system for information association which uses the electronic bookmark.

### BACKGROUND

In a process of reading a paper book, a bookmark is usually needed so as to conveniently record a reading progress. Conventional bookmarks are in a form of paper, metal, cloth, and so on, however, such bookmarks only can be used to mark the reading progress, and the function is too unitary. In reading, apart from the need of the bookmark for recording the reading progress, operations such as annotation and notetaking are usually also needed to be carried out for reading contents, so as to get a better understanding of the reading contents. Besides, when contents that are relatively difficult to understand are confronted, it needs to resort to online search for relevant contents so as to assist the understanding through network resources. Currently, annotation, notetaking, etc. for the reading contents are usually directly recorded in the blank of the paper book, if there are too many annotations or notes, pages of the book are easily messed up, and it is inconvenient to manage the notes. For contents that are hard to comprehend, the reading needs to be interrupted and query on a cellphone or a computer is needed, which undoubtedly disrupts a reading pace, and is unfavorable to improve the experience of reading the paper book.

### SUMMARY

In view of the above problems existing in the related art, embodiments of the present disclosure provide a method for information association, so as to realize association of annotation information and page information in a process of reading a paper book, thereby improving efficiency of information management and reading experience in the process of reading the paper book.

Besides, the embodiments of the present disclosure further provide an electronic bookmark using the method for information association.

Besides, the embodiments of the present disclosure further provide a system for information association which uses the electronic bookmark.

The method for information association may include the follows. An electronic bookmark covers a book reading page, and receives annotation information input for the book reading page. The electronic bookmark acquires page information of the covered book reading page, and associates the annotation information with the page information.

The electronic bookmark may include a page interaction unit and a control unit electronically coupled with each other. The page interaction unit is operable to cover a book reading page, and receive annotation information input for the book reading page. The control unit is operable to acquire page information of the book reading page covered by the page interaction unit, and associate the annotation information with the page information.

The system for information association may include a server and an electronic bookmark. The electronic bookmark may include a page interaction unit and a control unit electronically coupled with each other. The page interaction unit is operable to cover a book reading page, and receive annotation information input for the book reading page. The control unit is operable to acquire page information of the book reading page covered by the page interaction unit, and associate the annotation information with the page information. A communication connection is established between the electronic bookmark and the server through the control unit, and the electronic bookmark is operable to transmit the annotation information and the page information that are associated with each other to the server.

In the method for information association, the electronic bookmark covers the book reading page, acquires the page information of the book reading page, and receives the annotation information input for the book reading page, so as to realize the association of the annotation information and the page information of the book in the process of reading the paper book, thereby facilitating improving the efficiency of information management and the reading experience in the process of reading the paper book.

### BRIEF DESCRIPTION OF THE DRAWINGS

In order to illustrate technical solutions of embodiments of the present disclosure more clearly, below the accompanying drawings that need to be used in the description of the embodiments will be briefly described.
FIG. 1 is a first schematic structural view illustrating an electronic bookmark according to an embodiment of the present disclosure;
FIG. 2 is a second schematic structural view illustrating an electronic bookmark according to an embodiment of the present disclosure;
FIG. 3 is a third schematic structural view illustrating an electronic bookmark according to an embodiment of the present disclosure;
FIG. 4 is a fourth schematic view illustrating an electronic bookmark according to an embodiment of the present disclosure;
FIG. 5 is a schematic flow chart illustrating a method for information association according to an embodiment of the present disclosure;
FIG. 6 is a schematic structural view illustrating a system for information association according to an embodiment of the present disclosure.

### DETAILED DESCRIPTION

Below technical solutions of embodiments of the present disclosure will be described clearly and completely in conjunction with the accompanying drawings of the embodiments of the present disclosure. Apparently, some but not all of embodiments of the present disclosure are described. Based on the embodiments of the present disclosure, all the other embodiments, which a person ordinarily skilled in the art obtains without paying creative efforts, fall within the scope of protection of the present disclosure.

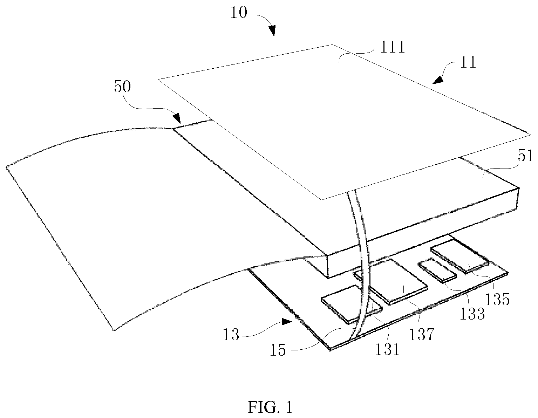

Referring to FIG. 1, in one embodiment of the present disclosure, an electronic bookmark 10 is provided. The electronic bookmark 10 is applied in a process of reading a paper book 50, so as to realize association of annotation information and page information of a book reading page 51 in the process of reading the paper book, thereby improving efficiency of information management and reading experience in the process of reading the paper book.

The electronic bookmark 10 may include a page interaction unit 11 and a control unit 13 that are electrically coupled with each other.

The page interaction unit 11 is operable to cover the book reading page 51, and receive annotation information input for the book reading page 51.

The control unit 13 is operable to acquire page information of the book reading page 51 covered by the page interaction unit 11, and associate the annotation information with the page information.

It can be understood that the page interaction unit 11 may be made of a transparent material, and when the electronic bookmark 10 covers the book reading page 51, the transparent page interaction unit 11 is aligned with a text part of the book reading page 51, thus reading is not affected. The page information of the book reading page 51 may be a page number of the page, text content information, text position information, paragraph layout information, etc.. The annotation information may be reading notes, text marks, etc.. In the embodiment, the page interaction unit 11 is electrically coupled to the control unit 13 through a connector 15 formed by a flexible printed circuit (FPC). After acquiring the page information of the book reading page 51, the control unit 13 associates the page information with the annotation information, so as to be subsequently transmitted to a server and/or shown by a display screen. It can be understood that showing by the display screen includes display and output of the page information and/or the annotation information. In the above, associating the page information with the annotation information refers to associating contents of the annotation information with contents of the annotated page information of the page information and/or a position of the annotation information with a position of the annotated page information of the page information, so as to subsequently show the annotation information on a corresponding position annotated in the page information by calling the page information and the annotation information that are associated with each other. For example, a user uses the page interaction unit 11 of the electronic bookmark to cover the book reading page 51 of the book, and inputs the annotation information, for example reading notes of a text, through the page interaction unit 11. The control unit 13 acquires and stores the text, or transmits the text to the server (including a cloud server), or transmits the text to the display screen coupled to the electronic bookmark, such that other devices in communication connection with the electronic bookmark can display and output the text by calling the annotation information stored in the electronic bookmark or the server. In other manners, apart from storing the contents of the annotation information, the position of the annotation information and the page information, e.g. the page number, of the book reading page 51 are further stored. When the annotation information is called, the book reading page 51 is acquired through the page information, and the book reading page 51 also can be further displayed and output, i.e., the page of the book is electronically displayed, through the stored text content information, the stored text position information, the stored paragraph layout information, etc. of the book reading page 51. Furthermore, the annotation information can be superposed on the page information to be displayed and output. Thus, the book reading page 51 and the position corresponding to actual annotation of the book reading page 51 in annotating can be restored. In other embodiments, the electronic bookmark or the server can store an electronic file of the book in advance, and when being called, through the page number of the page information, the book reading page 51 of the electronic file corresponding to the page number can be directly acquired, and the contents of the annotation information are superposed on the book reading page 51 of the electronic file according to the position of the annotation information to be displayed and output.

It can be understood that the annotation information corresponding to the book reading page 51 which is stored in the electronic bookmark or the server may include one or more pieces of annotation information obtained by one time or more times, that is, the one or more pieces of annotation information constitute historical annotation information of the book reading page 51. Calling the annotation information mentioned below includes calling one or more pieces of annotation information of the historical annotation information.

The control unit 13 may include a controller 131, a communication module 133, and a memory 135. The controller 131 is electrically coupled to the page interaction unit 11, the communication module 133, and the memory 135. The communication module 133 is operable to establish electrical coupling between the electronic bookmark 10 and an external device (not illustrated in the figures) or the server (not illustrated in the figures). The memory 135 is operable to store the annotation information and the page information, and/or resource information related to the book 50 corresponding to the book reading page 51. The external device may include an input device (e.g., a scanner, an image recognition device, a keyboard, a mouse, and so on), and an output device (e.g., a display, a printer, and so on).

The page interaction unit 11 may include a flexible touch pad 111. The flexible touch pad 111 is electrically coupled to the controller 131, and operable to receive a touch input operation input by the user, and convert the touch input operation into a touch signal to be transmitted to the controller 131. The controller 131 is operable to acquire, according to the touch signal, position information and corresponding content information of the touch input operation on the flexible touch pad 111, and associate the content information with the position information to form the annotation information.

Specifically, a process that the flexible touch pad 111 receives the touch input input by the user may include the follows.

A first input of the user is received. The first input may be a gesture for a preset function or a trigger operation for a preset input mark, and the first input is operable to trigger a corresponding function, for example, marking, modifying text, adding text, and so on. Furthermore, a second input of the user is received. The second input may be for input contents corresponding to the function triggered by the first input, for example, a specific form of marking, modified text, added text, and so on. It can be understood that functions of the first input and of the second input can be exchanged, for example, the first input is operable to input contents, for example, choose certain text in the book reading page or input newly added text, and the second input is operable to trigger a corresponding function, for example, the second input may be a gesture swiped from a position of the first input according to a preset route to trigger a corresponding function, for example, a share function, thus the contents corresponding to the first input can be shared. It can be understood that the functions corresponding to the first input and the second input may be determined by the controller 131. The first input and the second input also may be transmitted to the server through the communication module 133, and the functions corresponding to the first input and the second input are determined by the server and fed to the communication module 133, thus the corresponding functions are executed by the controller 131.

In an optional embodiment, the flexible touch pad 111 further may include a number of function trigger areas corresponding to a non-text arrangement area of the book reading page 51. Each function trigger area is preset with a corresponding function, and each function trigger area is preset with an identifier of a corresponding function, for example, the identifier in each function trigger area is formed on the flexible touch pad 111 in a screen printing manner, and a corresponding touch input is realized by receiving a touch operation performed on the identifier in each function trigger area by the user. Specifically, by determining whether touch coordinates of a touch action fall within a coordinate range of the function trigger area, whether a corresponding function corresponding to the coordinate range is triggered is determined. For example, the function trigger areas may include a share identifier, a text highlight display identifier, etc., then after an instruction of text selection input by the user is received, the selected text can be shared by triggering the share identifier, and the highlight display of the text can be realized by triggering the text highlight display identifier.

In the embodiment, the communication module 133 may be a wireless communication module such as WiFi, Bluetooth, and so on, and also may be a USB communication module. The input device may be an electronic pen including a sensing identification unit or an image scanning unit, and a communication connection between the input device and the electronic bookmark 10 is established through the communication module 133, and then the page information of the book reading page 51 acquired through the sensing identification unit or the image scanning unit is transmitted to the electronic bookmark 10 through the communication module 133. For example, a sensing unit preset on the book 50 can be sensed by the sensing identification unit to acquire the page information of the book reading page 51, or a barcode of the book 50 and the page number of the book reading page 51 are scanned and acquired by the image scanning unit to acquire the page information of the book reading page 51. The sensing unit may be a near-field communication tag, the tag may be arranged at any position of the book reading page 51, and operable to store the page number of the book reading page 51. Correspondingly, the sensing identification unit may be a near-field communication card reader, the reader may be arranged on the page interaction unit 11, and when the page interaction unit 11 covers the book reading page 51, a position of the sensing identification unit of the page interaction unit 11 is corresponding to a position of the sensing unit of the book reading page 51, so as to read the page number stored in the sensing unit. It can be understood that the input device further may be a device such as a cellphone including a camera, a tablet computer including a camera, and so on, and a communication connection between the device and the electronic bookmark 10 is established through Wi-Fi, Bluetooth or USB, thus the relevant page information can be acquired via the camera, and transmitted to the electronic bookmark 10 through Wi-Fi, Bluetooth or USB communication.

The server may store the electronic file of the book 50, relevant book information of the book 50, and relevant resource information of the book 50. It can be understood that the server further may be a computer connected to the Internet. After the communication connection between the electronic bookmark 10 and the server is established through the communication module 133, the electronic bookmark 10 can acquire from the server the book information and the relevant resource information of the book 50 through the communication module 133. For example, when the electronic bookmark 10 acquires the book information for example the barcode of the book 50 and the page number of the book reading page 51 through the input device, the barcode and the page number can be transmitted to the server through the communication module 133. The server acquires the electronic file of the book corresponding to the barcode according to the barcode and the page number, and extracts corresponding page information from the electronic file according to the page number, and further transmits the page information to the electronic bookmark 10. It can be understood that the electronic bookmark 10 further can acquire from the server the relevant resource information according to the annotation information and/or the page information. The resource information may be but is not limited to a book front cover, author information, index information, relevant videos, etc. of the book 50, and also may be other resource information related to the annotation information, for example, definitions of annotation information, or cited literatures referred in the annotation information, etc..

It can be understood that the control unit 13 may further include a power management module 137. The power management module 137 is operable to supply work power to various modules of the electronic bookmark 10.

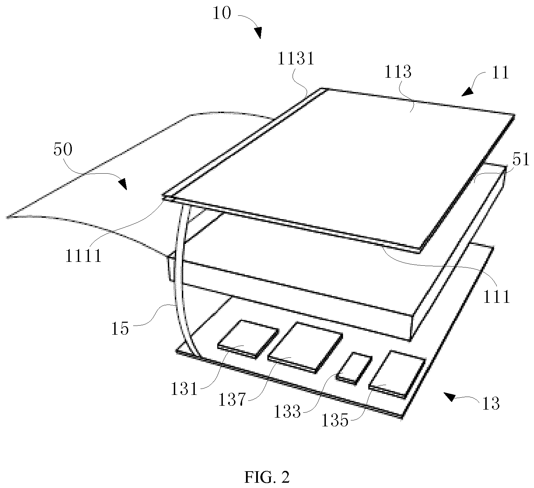

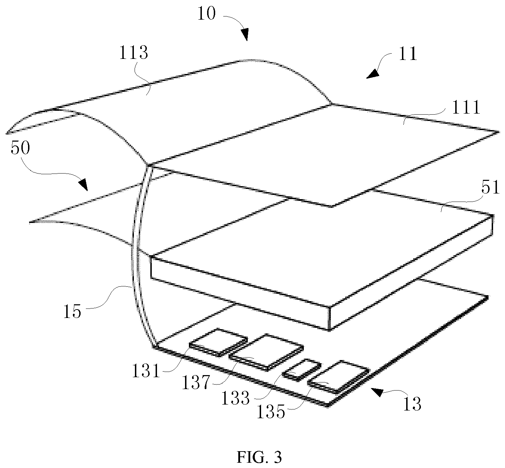

Referring to FIG. 2 and FIG. 3 together, the page interaction unit 11 may further include a flexible display screen 113. The flexible display screen 113 is electrically coupled to the controller 131 to display the page information and the annotation information.

The flexible touch pad 111 may include a first coupling area 1111, the flexible display screen 113 may include a second coupling area 1131, the first coupling area 1111 and the second coupling area 1131 are electrically coupled, both the first coupling area 1111 and the second coupling area 1131 are electrically coupled to the controller 131 through the connector 15, and the flexible display screen 113 can be folded or unfolded with respect to the flexible touch pad 111. As illustrated in FIG. 2, the flexible display screen 113 is folded with respect to the flexible touch pad 111. As illustrated in FIG. 3, the flexible display screen 113 is unfolded with respect to the flexible touch pad 111.

In the embodiment, structural and electrical coupling between the flexible touch pad 111 and the flexible display screen 113 is realized through a transparent and conductive material merely in positions of the first coupling area 1111 and the second connecting area 1131, and then as a whole the flexible touch pad 111 and the flexible display screen 113 are electrically coupled to the control unit 13 through the connector 15 from the first coupling area 1111 and the second connecting area 1131 that are coupled with each other.

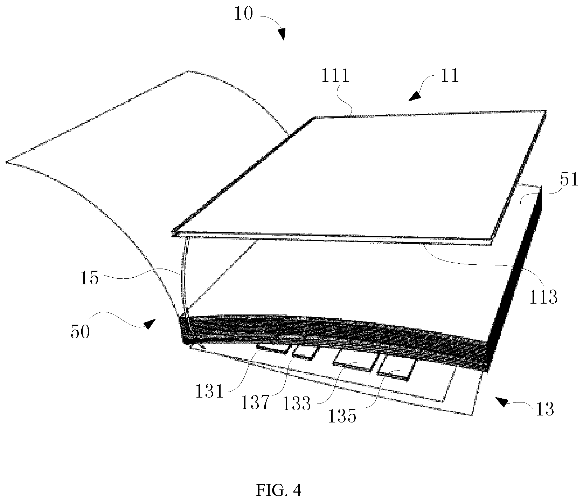

Referring to FIG. 4, in an optional embodiment, the flexible touch pad 111 directly fits on the flexible display screen 113, and both the flexible touch pad 111 and the flexible display screen 113 are electrically coupled to the control unit 13 through the connector 15.

It can be understood that the flexible touch pad 111 may be a transparent flexible touch pad, and the flexible display screen 113 may be a transparent flexible display screen.

The communication module 133 may be further operable to transmit the annotation information and the page information that are associated with each other to the server. The server may store the resource information related to the book corresponding to the book reading page, the page information, and the historical annotation information.

Specifically, when the page interaction unit 11 covers the book reading page 51, the user can read contents of the book reading page 51 through the page interaction unit 11. When the user needs to make annotation for the contents of the book reading page 51, the selection of the annotated contents can be completed through a touch input operation on the flexible touch pad 111, for example, drawing a box that surrounds a text area corresponding to the annotated contents or swiping the text area with a finger. The flexible touch pad 111 converts the touch input operation into a touch signal to be transmitted to the controller 131. The controller 131 then acquires, according to the touch signal, the position information and corresponding content information of the touch input operation on the flexible touch pad 111, and associates the content information and the position information to form the annotation information. Furthermore, the electronic bookmark 10 associates the annotation information with the page information through the controller 131, and transmits the annotation information and the page information that are associated with each other to the server through the communication module 133.

It can be understood that when the annotated contents are selected through the flexible touch pad 111, the selected contents also can be shared to a corresponding share platform or a social platform associated with the server, for example, WeChat, microblog, and so on.

In an optional embodiment, the electronic bookmark 10 also may be installed with and run text processing or picture processing applications, for example, word, ppt, photoshop, and so on. When the page interaction unit 11 includes the flexible display screen 113, tool bars corresponding to the applications can be displayed on a position of the page interaction unit 11 corresponding to the non-text arrangement area of the book reading page 51 through the flexible display screen 113, for example, a tool bar of word, a tool bar of ppt, a tool bar of photoshop and so on are displayed. After selecting the text of the book reading page 51 or adding new text through the flexible touch pad 111, the user can further trigger one tool bar to call a corresponding function of one application, so as to process the selected text or the added text. For example, font change can be made on the selected text or the added text by triggering the tool bar of word.

The communication module 133 may be further operable to acquire from the server corresponding historical annotation information according to the page information. The flexible display screen 113 may be further operable to show the historical annotation information on a corresponding position of the book reading page. Due to the transparency of the flexible display screen, when the flexible display screen 113 covers the book reading page 51, reading is not affected. Also, when the annotation information is called, the contents of the annotation information also can be displayed on a position corresponding to the annotation information, such that the electronically displayed annotation information is integrated with the book.

Specifically, after the communication connection between the electronic bookmark 10 and the server is established through the communication module 133, the acquired page information of the book reading page 51 covered by the page interaction unit 11 can be transmitted to the server, and the historical annotation information corresponding to the book reading page 51 can be acquired from the server, and then the historical annotation information is shown on the corresponding position of the book reading page 51 through the flexible display screen 113. For example, after the user makes annotation to contents of a page of a certain book through the electronic bookmark 10, the electronic bookmark 10 associates the annotation information with the page information to be transmitted to the server. When the user reads again the page of the book, the historical annotation information corresponding to the page can be called from the server through the electronic bookmark 10, and the annotation information is shown through the flexible display screen 113.

The communication module 133 may be further operable to acquire from the server resource information related to the annotation information. The flexible display screen 113 may be further operable to show the resource information related to the annotation information.

Specifically, the electronic bookmark 10 also may be installed with and run a specific application, for example, an electronic bookmark management application matched with the electronic bookmark and the server. An identifier of the electronic bookmark management application is displayed on the position of the page interaction unit 11 corresponding to the non-text arrangement area of the book reading page 51 through the flexible display screen 113, then after the annotation information for the book reading page 51 input by the user is received, the identifier of the electronic bookmark management application can be triggered, then the electronic bookmark management application transmits the annotation information to the server through the communication module 133, and acquires from the server the resource information related to the annotation information. For example, the annotation information may be a movie name, then after the user triggers the identifier of the electronic bookmark management application, the electronic bookmark management application transmits the movie name to the server, and acquires corresponding movie resources from the server, then the movie resources can be played through the flexible display screen 113.

In an optional embodiment, a communication connection between the electronic bookmark 10 and a display terminal can be established through the communication module 133. When the user performs an annotation operation on the book reading page 51 through the electronic bookmark 10, remote share of the page information and the annotation information can be realized by sharing in real time the page information and the annotation information of the book reading page 51 on the display terminal through the communication module 133.

In an optional embodiment, the electronic bookmark 10 may further include a mode switching unit (not shown in the figures) operable to switch work modes of the electronic bookmark 10 among a bookmark mode, a news push mode, and a tablet mode. In the bookmark mode, the electronic bookmark 10 is operable to realize the association of the page information and the annotation information of the book, and acquire and show related resource information according to the annotation information. In the news push mode, the electronic bookmark 10 is operable to display and browse news pages. In the tablet mode, the electronic bookmark 10 is operable to run and operate applications. In the embodiment, by receiving a specific gesture operation of the user on the flexible touch pad 111, the mode switching unit can be triggered to switch the work modes of the electronic bookmark 10, alternatively, a corresponding mode switching identifier can be displayed on the position of the page interaction unit 11 corresponding to the non-text arrangement area of the book reading page 51 or formed in a screen printing manner, and by receiving the touch operation performed on the mode switching identifier by the user, the mode switching unit is triggered to switch the work modes of the electronic bookmark 10.

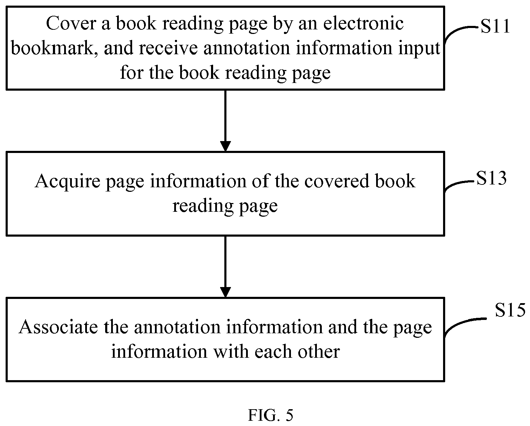

Referring to FIG. 5, in one embodiment of the present disclosure, a method for information association which is applied in the electronic bookmark 10 is further provided. The method for information association at least includes the following steps.

Step S11: an electronic bookmark covers a book reading page, and receives annotation information input for the book reading page.

Step S13: page information of the covered book reading page is acquired.

step S15: the annotation information and the page information are associated with each other.

Acquiring the page information of the covered book reading page may include the follows. By receiving a page number of the book reading page input by a user, the page information of the book reading page corresponding to the page number is acquired. Alternatively, by sensing a sensing unit preset on the book reading page, the page number of the book reading page is acquired, and the page information of the book reading page is acquired according to the page number. Alternatively, the page number of the book reading page is acquired through an input device electrically coupled to the electronic bookmark, and the page information of the book reading page is acquired according to the page number.

Receiving the annotation information input for the book reading page may include the follows. A touch input operation performed on the electronic bookmark by the user is received. Position information of the touch input operation on the electronic bookmark is acquired. When the electronic bookmark covers the book reading page, positions of the electronic bookmark are corresponding to positions of the book reading page, respectively. Content information corresponding to the touch input operation is acquired, and the content information and the position information are associated with each other to form the annotation information.

After associating the annotation information with the page information, the method may further include the follows. The annotation information and the page information that are associated with each other are transmitted to the server. The server stores resource information related to a book corresponding to the book reading page, the page information, and historical annotation information.

After transmitting the annotation information and the page information that are associated with each other to the server, the method may further include the follows. Resource information related to the annotation information and/or resource information related to the page information is acquired from the server. The resource information related to the annotation information and/or the resource information related to the page information is shown through a display screen of the electronic bookmark.

After acquiring the page information of the book reading page and before receiving the annotation information input for the book reading page, the method may further include the follows. Corresponding historical annotation information is acquired from the server according to the page information. The historical annotation information is shown on a corresponding position of the book reading page through the display screen of the electronic bookmark.

It can be understood that for specific implementation of various steps in the method for information association, reference can be made to relevant description in the electronic bookmark embodiments illustrated in FIG. 1 to FIG. 4 of the present disclosure, and unnecessary details will not be given herein.

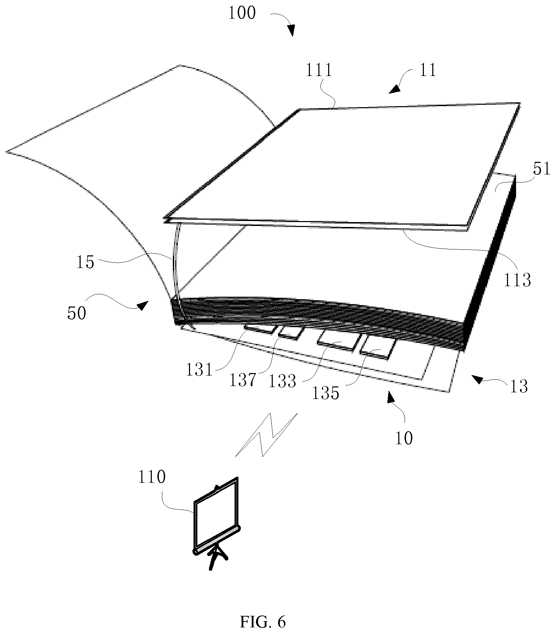

Referring to FIG. 6, in one embodiment of the present disclosure, a system 100 for information association is further provided. The system may include a server 110 and the electronic bookmark 10 in the embodiments illustrated in FIG. 1 to FIG. 4 of the present disclosure. A communication connection is established between the electronic bookmark 10 and the server 110 through the communication module 133 of the control unit 13 of the electronic bookmark 10. The electronic bookmark 10 is operable to transmit the annotation information and the page information that are associated with each other to the server 110, and acquire from the server 110 the resource information related to the annotation information according to the annotation information and/or the resource information related to the page information according to the page information, and show the resource information related to the annotation information and/or the resource information related to the page information through the flexible display screen 113.

The server 110 may store the resource information related to the book 50. Alternatively, the server 110 may be further operable to be connected to the Internet, and retrieve on the Internet according to the annotation information and acquire the resource information related to the annotation information from the Internet, and/or retrieve on the Internet according to the page information and acquire the resource information related to the page information from the Internet.

It can be understood that in the system 100 for information association provided in the embodiment, for the intercommunication and information interaction process between the electronic bookmark 10 and the server 110, reference can be made to related description in the electronic bookmark embodiments illustrated in FIG. 1 to FIG. 4 of the present disclosure, and unnecessary details will not be given herein.

For the electronic bookmark 10 provided in the embodiment of the present disclosure, by arranging the page interaction unit 11 operable to cover the book reading page 51, when the page interaction unit 11 covers the book reading page 51, by acquiring the page information of the book reading page 51, and receiving the annotation information for the book reading page 51 input by the user, the page information and the annotation information are associated with each other through the control unit 13, thus the association of the page information and the annotation information is realized in the process of reading the paper book, thereby facilitating improving the efficiency of information management in the process of reading the paper book. Furthermore, the communication connection between the electronic bookmark 10 and the server 110 is established through the communication module 133. The electronic bookmark 10 transmits the page information and the annotation information that are associated with each other to the server 110 through the communication module 133, thus the electronic bookmark 10 can acquire from the server 110 the resource information related to the annotation information and/or the page information, thereby enriching the reading experience.

The above disclosures merely illustrate preferable embodiments of the present disclosure, and the scope of right of the present disclosure certainly cannot be limited thereto. A person ordinarily skilled in the art can understand all or part of the procedure for realizing the above embodiments, and equivalent changes made according to the claims of the present disclosure still fall within the scope of the present disclosure.

## Claims

1. A method for information association, comprising:
covering, by an electronic bookmark, a book reading page;
receiving, by the electronic bookmark, annotation information input for the book reading page;
acquiring page information of the covered book reading page; and
associating the annotation information with the page information.

2. The method for information association of claim 1, wherein the acquiring page information of the covered book reading page comprises:
acquiring, by receiving a page number of the book reading page input by a user, the page information of the book reading page corresponding to the page number; or
acquiring, by sensing a sensing unit preset on the book reading page, the page number of the book reading page, and acquiring the page information of the book reading page according to the page number; or
acquiring, through an input device electrically coupled to the electronic bookmark, the page number of the book reading page, and acquiring the page information of the book reading page according to the page number.

3. The method for information association of claim 2, wherein the receiving annotation information input for the book reading page comprises:
receiving a touch input operation;
acquiring position information of the touch input operation on the electronic bookmark, wherein when the electronic bookmark covers the book reading page, positions of the electronic bookmark are corresponding to positions of the book reading page, respectively; and
acquiring content information corresponding to the touch input operation, and associating the content information with the position information to form the annotation information.

4. The method for information association of claim 3, wherein after the associating the annotation information with the page information, the method further comprises:
transmitting the annotation information and the page information that are associated with each other to the server, wherein the server stores resource information related to a book corresponding to the book reading page, the page information, and historical annotation information.

5. The method for information association of claim 4, wherein after transmitting the annotation information and the page information that are associated with each other to the server, the method further comprises:
acquiring from the server resource information related to the annotation information or the page information; and
showing the resource information through a display screen of the electronic bookmark.

6. The method for information association of claim 4, wherein after the acquiring page information of the book reading page and before the receiving annotation information input for the book reading page, the method further comprises:
acquiring from the server corresponding historical annotation information according to the page information; and
showing the historical annotation information on a corresponding position of the book reading page through the display screen of the electronic bookmark.

7. An electronic bookmark comprising:
a page interaction unit operable to cover a book reading page, and operable to receive annotation information input for the book reading page; and
a control unit electrically coupled to the page interaction unit and operable to acquire page information of the book reading page covered by the page interaction unit, and operable to associate the annotation information with the page information.

8. The electronic bookmark of claim 7, wherein the control unit comprises a controller and a communication module, the controller is electrically coupled to the page interaction unit and the communication module; the communication module is operable to establish electrical coupling between the electronic bookmark and an external device or a server.

9. The electronic bookmark of claim 8, wherein the page interaction unit comprises a flexible touch pad,the flexible touch pad is electrically coupled to the controller and operable to receive a touch input operation input by the user, and futher convert the touch input operation into a touch signal to be transmitted to the controller; the controller is operable to acquire, according to the touch signal, position information and corresponding content information of the touch input operation on the flexible touch pad, and the controller is further operable to associate the content information with the position information to form the annotation information.

10. The electronic bookmark of claim 9, wherein the page interaction unit further comprises a flexible display screen, the flexible display screen is electrically coupled to the controller and operable to display the page information and the annotation information.

11. The electronic bookmark of claim 10, wherein the flexible touch pad comprises a first coupling area, the flexible display screen comprises a second coupling area, the first coupling area and the second coupling area are electrically coupled, both the first coupling area and the second coupling area are electrically coupled to the controller, and the flexible display screen is operable to be folded or unfolded with respect to the flexible touch pad; or
the flexible touch pad fits on the flexible display screen.

12. The electronic bookmark of claim 10, wherein the control unit comprises a memory electrically coupled to the controller and operable to store the page information, historical annotation information, and/or resource information related to a book corresponding to the book reading page.

13. The electronic bookmark of claim 10 or 11, wherein the communication module is further operable to transmit the annotation information and the page information that are associated with each other to the server, the server stores resource information related to a book corresponding to the book reading page, the page information, and historical annotation information.

14. The electronic bookmark of claim 13, wherein the communication module is further operable to acquire from the server corresponding historical annotation information according to the page information;
the flexible display screen is further operable to show the historical annotation information on a corresponding position of the book reading page.

15. The electronic bookmark of claim 13, wherein the communication module is further operable to acquire from the server the resource information related to the annotation information;
the flexible display screen is further operable to display the resource information related to the annotation information.

16. The electronic bookmark of any of claims 10 to 12, 14 to 15, wherein the electronic bookmark further comprises a mode switching unit operable to switch work modes of the electronic bookmark among a bookmark mode, a news push mode, and a tablet mode, in the bookmark mode, the electronic bookmark is operable to realize association of the page information and the annotation information of a book, and acquire and show related resource information according to the annotation information; in the news push mode, the electronic bookmark is operable to display and browse news pages; in the tablet mode, the electronic bookmark is operable to run and operate applications.

17. A system for information association, comprising a server and the electronic bookmark of any of claims 7 to 16, wherein a communication connection is established between the electronic bookmark and the server through the control unit, the electronic bookmark is operable to transmit the annotation information and the page information that are associated with each other to the server.

18. The system for information association of claim 17, wherein the electronic bookmark comprises a flexible display screen, and the electronic bookmark is further operable to acquire from the server resource information related to the annotation information according to the annotation information or resource information related to the page information according to the page information, and show the resource information related to the annotion information or the resource information related to the page information through the flexible display screen.

19. The system for information association of claim 17 or 18, wherein the server is further operable to be connected to Internet, and retrieve on the Internet according to the annotation information and acquire resource information related to the annotation information from the Internet, or retrieve on the Internet according to the page information and acquire resource information related to the page information from the Internet.
